# EUROPEAN PATENT APPLICATION

(11) **EP 4 552 831 A1**
(43) Date of publication of application: **14.05.2025**
(21) Application number: 22949982.7
(22) Date of filing: 10.08.2022
(51) Int. Cl.: B29C 70/34, B29C 70/54, B29C 33/00

(54) **FORMING MOLD AND METHOD FOR CARBON FIBER COMPOSITE MATERIAL**

(30) Priority: 06.07.2022 CN 202210798163
(71) Applicant: Xiamen Hongjiweiye Industrial Co., Ltd., Xiamen, Fujian 361000 (CN)
(72) Inventor: WANG, Jingshan, Xiamen, Fujian 361000 (CN); CHEN, Shunhe, Xiamen, Fujian 361000 (CN); ZHANG, Haibing, Xiamen, Fujian 361000 (CN)
(74) Representative: Zaboliene, Reda
(86) International application number: PCT/CN2022/111452
(87) International publication number: WO 2024/007417

(57) **Abstract**

Disclosed are a forming mold and method for a carbon fiber composite material. The mold includes a curing mold and a pre-forming shell mold detachably spliced, the curing mold is provided with a curing cavity used for containing the pre-forming shell mold, the pre-forming shell mold is provided with a pre-forming cavity adapted to a structure of a formed product, an inner wall of the pre-forming cavity is used for laying a plurality of layers of pre-forming layers of carbon fiber composite materials to form a pre-forming piece of a product, a nylon air pipe is arranged in the pre-forming cavity, and the nylon air pipe supports the pre-forming layer to be tightly attached to the inner wall of the pre-forming cavity in an inflated state. The present disclosure provides a forming mold and method for a carbon fiber composite material.

## Description

### TECHNICAL FIELD

The present disclosure herein relates to the technical field of carbon fiber, and in particular to a forming mold and method for a carbon fiber composite material.

### BACKGROUND

The carbon fiber composite materials, with advantages of being lightweight and high strength, have been widely applied, especially in the field of premium bicycles. As people's living standards continue to improve, the demand for premium bicycles has grown significantly, and cycling has become increasingly popular. People are now seeking lighter cycling tools, and carbon fiber, due to its lightweight and strong characteristics, is very suitable for manufacturing lightweight bicycles.

In the prior art, when carbon fiber composite materials are used to manufacture products, they are typically produced by laying carbon fiber yarn layers in the curing cavity of a metal mold, and then curing and forming the material within the mold through high-temperature heating. However, this method is cumbersome, inefficient, and requires the use of release agents for demolding. Moreover, after demolding, the metal mold may retain excess resin. Furthermore, different product components require varying structures of the curing cavity in the metal mold, necessitating the use of multiple metal molds, which leads to high costs.

### SUMMARY

The present disclosure proposes a forming mold method for a carbon fiber composite material to solve the above problems.

In order to achieve the above objects, the present disclosure adopts the following technical solutions:
a forming mold for a carbon fiber composite material, including a curing mold and a pre-forming shell mold detachably spliced, the curing mold is provided with a curing cavity used for containing the pre-forming shell mold, the pre-forming shell mold is provided with a pre-forming cavity adapted to a structure of a formed product, an inner wall of the pre-forming cavity is used for laying a plurality of layers of pre-forming layers of carbon fiber composite materials to form a pre-forming piece of a product, a nylon air pipe is arranged in the pre-forming cavity, and the nylon air pipe supports the pre-forming layer to be tightly attached to the inner wall of the pre-forming cavity in an inflated state.

Preferably, the pre-forming shell mold comprises a plurality of groups of split shell molds spliced together.

Preferably, two adjacent groups of the split shell molds are detachably spliced by means of an engaging structure.

Preferably, the curing mold includes an upper curing mold and a lower curing mold, the upper curing mold is arranged right above the lower curing mold in a lifting mode, a bottom side of the upper curing mold is provided with an upper curing groove, a top side of the lower curing mold is provided with a lower curing groove, and the upper curing groove and the lower curing groove are matched to form the curing cavity used for containing the pre-forming shell mold.

Preferably, the pre-forming layer includes a plurality of layers and is made of the carbon fiber composite material.

Preferably, the curing mold is made of a metal material.

Preferably, the pre-forming shell mold is made of a plastic material.

A preparation method for a carbon fiber composite material, including the following steps:
S1, pre-manufacturing a plurality of groups of split shell molds, and laying a carbon fiber composite material on the inner sides of the split shell molds to form pre-forming layers;
S2, assembling and combining the plurality of groups of split shell molds to form a pre-forming shell mold, tightly connecting and matching the pre-forming layers on the inner sides of each group of the split shell molds to form a pre-forming piece of a product, and pre-placing the nylon air pipe into an inner portion of the pre-forming piece;
S3, inflating air into the nylon air pipe, and keeping the pressure for a few seconds, so that the nylon air pipe expands to support the pre-forming layers to be tightly attached to the inner wall of a pre-forming cavity of the pre-forming shell mold;
S4, placing the pre-forming shell mold into a curing cavity of a curing mold, heating the curing mold, and pressurizing the nylon air pipe, wherein the heating process and the pressurization process are performed at the same time until the temperature and the pressure reach the requirement of curing forming, and then the pressure is continuously kept until the pre-forming piece is completely formed and cured to form an initial product; and
S5, opening the curing mold, stripping off the pre-forming shell mold from the surface of the initial product, taking out the initial product, and performing machining and surface treatment to obtain a finished product.

After adopting the above technical solution, compared with the background, the present disclosure has the following advantages:
1. The present disclosure provides a forming mold and method for a carbon fiber composite material. The pre-forming layer of the carbon fiber composite material is first laid on the inner side of each split shell mold. Subsequently, each group of split shell mold is assembled to form the pre-forming shell mold. The pre-forming shell mold is then placed into a curing mold for curing and forming. The pre-forming cavity structure of the pre-forming shell mold is matched with the structure of the product to be formed. During the laying process, the carbon fiber composite material is laid layer by layer from the outside to the inside, so as to directly reinforce the local area that needs to be strengthened inside, ensuring the overall strength of the formed product. Meanwhile, it achieves a smooth and flat surface on the product, eliminating the need for subsequent surface smoothing processes after the product is formed, and saving labor costs.
2. The present disclosure provides a forming mold and method for a carbon fiber composite material, which are convenient to demold, the pre-forming shell mold can be taken out without a release agent, the pre-forming shell mold made of the plastic material can be directly stripped off from the surface of the cured and formed product, clean and non-residue in the curing mold can be continuously used, the mold is not required to be cleaned for a long time, the demolding operation is simple and convenient, the product is not easy to damage, compared with a traditional process mode, the production process is simplified, the process time is shortened, and the enterprise production cost is reduced.
3. The present disclosure provides a forming mold and method for a carbon fiber composite material. The pre-forming cavity structure of the pre-forming shell mold can be adjusted according to the actual product structure requirements. The curing mold can be a general mold, and compared to adjusting the structure of the curing mold made of metal material, the cost and difficulty of adjusting the pre-forming shell mold made of plastic material are both lower, thereby saving the production cost of the enterprise.

### BRIEF DESCRIPTION OF THE DRAWINGS

FIG. 1 is a schematic diagram of the forming process flow according to the present disclosure;
FIG. 2 is a structure schematic diagram of a forming mold according to the present disclosure; and
FIG. 3 is a structure schematic diagram of a pre-forming shell mold according to the present disclosure.

### DETAILED DESCRIPTION OF THE EMBODIMENTS

In order to make the purpose, technical solutions and advantages of the present disclosure more clear, the present disclosure will be further described in detail below with reference to the accompanying drawings and embodiments. It should be understood that the specific embodiments described here are only used to explain the present disclosure, and are not intended to limit the present disclosure.

### Embodiment

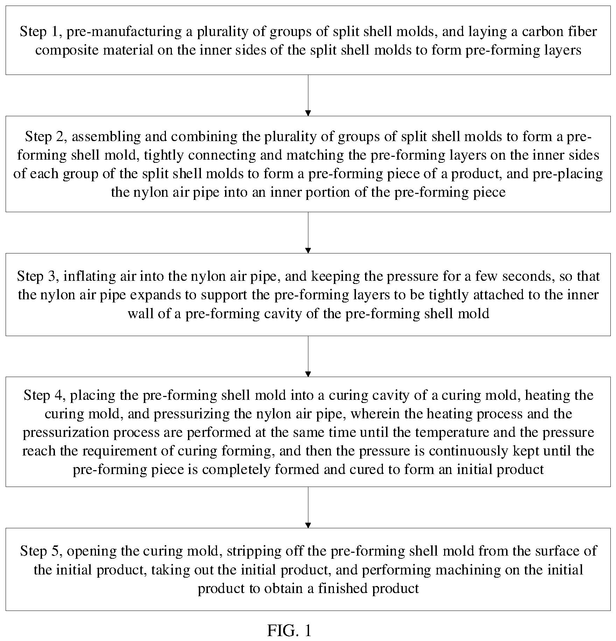

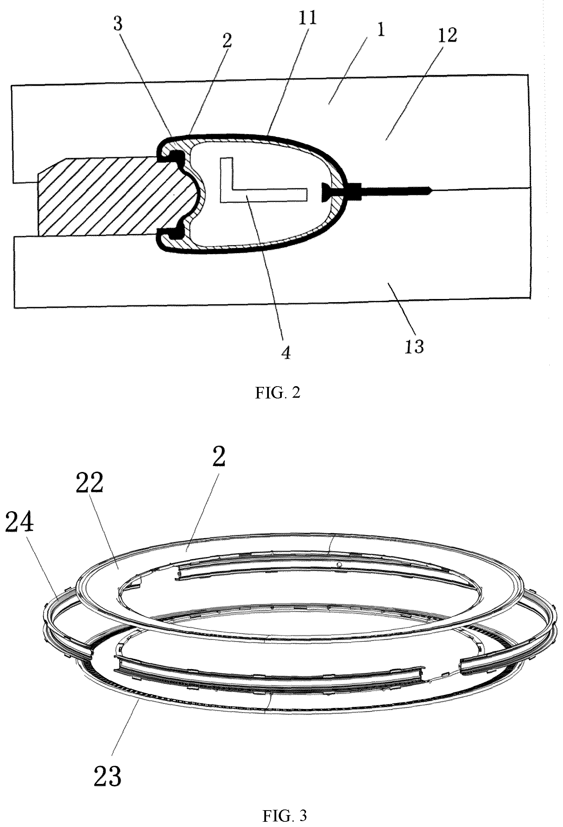

As shown in FIGS. 1 to 3, the present disclosure discloses a forming mold for a carbon fiber composite material. In this embodiment, products formed from carbon fiber composite materials include but are not limited to bicycle rims, bicycle frames, bicycle handlebars, etc., this embodiment specifically takes a bicycle rim as an example. The forming mold includes a curing mold 1 and a pre-forming shell mold 2 detachably spliced, the curing mold 1 is provided with a curing cavity 11 used for containing the pre-forming shell mold 2, the pre-forming shell mold 2 is provided with a pre-forming cavity 21 adapted to a structure of a formed product, an inner wall of the pre-forming cavity 21 is used for laying a plurality of layers of pre-forming layers 3 of carbon fiber composite materials to form a pre-forming piece of a product, a nylon air pipe 4 is arranged in the pre-forming cavity 21, and the nylon air pipe 4 supports the pre-forming layer 3 to be tightly attached to the inner wall of the pre-forming cavity 21 in an inflated state.

The pre-forming shell mold 2 comprises a plurality of groups of split shell molds spliced together. The two adjacent groups of the split shell molds are detachably spliced by means of an engaging structure. The engaging structure includes two parts: a buckle and a bayonet. By inserting the buckle into the bayonet for snap-fastening, the two adjacent groups of the split shell molds can be fixed and spliced.

The curing mold 1 includes an upper curing mold 12 and a lower curing mold 13, the upper curing mold 12 is arranged right above the lower curing mold 13 in a lifting mode, a bottom side of the upper curing mold 12 is provided with an upper curing groove, a top side of the lower curing mold 13 is provided with a lower curing groove, and the upper curing groove and the lower curing groove are matched to form the curing cavity 11 used for containing the pre-forming shell mold 2.

The pre-forming layer 3 includes a plurality of layers and is made of carbon fiber composite material. The layers of the pre-forming layer 3 at different locations can be adjusted according to actual needs. For example, several more layers can be laid for reinforcement in parts that need reinforcement.

The curing mold 1 is made of a metal material, and the pre-forming shell mold 2 is made of a plastic material.

The present disclosure also discloses a preparation method for a carbon fiber composite material, which includes the following steps:
S1, pre-manufacturing a plurality of groups of split shell molds, and laying a carbon fiber composite material on the inner sides of the split shell molds to form pre-forming layers 3;
S2, assembling and combining the plurality of groups of split shell molds to form a pre-forming shell mold 2, tightly connecting and matching the pre-forming layers 3 on the inner sides of each group of the split shell molds to form a pre-forming piece of a product, and pre-placing the nylon air pipe 4 into an inner portion of the pre-forming piece;
S3, inflating air into the nylon air pipe 4, and keeping the pressure for a few seconds, so that the nylon air pipe 4 expands to support the pre-forming layers to be tightly attached to the inner wall of a pre-forming cavity 21 of the pre-forming shell mold 2;
S4, placing the pre-forming shell mold 2 into a curing cavity 11 of a curing mold 1, heating the curing mold 1, and pressurizing the nylon air pipe 4, wherein the heating process and the pressurization process are performed at the same time until the temperature and the pressure reach the requirement of curing forming, and then the pressure is continuously kept until the pre-forming piece is completely formed and cured to form an initial product; and
S5, opening the curing mold 1, stripping off the pre-forming shell mold 2 from the surface of the initial product, taking out the initial product, and performing machining and surface treatment to obtain a finished product.

In this embodiment, the formed product specifically takes a bicycle rim as an example. The split shell mold 2 includes three groups: an upper shell mold 22, a lower shell mold 23 and an outer ring shell mold 24. The upper shell mold 22 is provided with a first buckle inside, and the lower shell mold 23 is provided with a first bayonet adapted to the first buckle inside. The outer sides of the upper shell mold 22 and the lower shell mold 23 are both provided with second bayonets, and the two lower ends of the outer ring shell mold 24 are respectively provided with second buckles matched with the second bayonets. The pre-forming layer 3 includes four groups: an upper pre-forming layer, a lower pre-forming layer, an outer ring pre-forming layer, and an inner ring pre-forming layer. The specific molding method includes the following steps:
1) pre-manufacturing the upper shell mold 22, the lower shell mold 23 and the outer ring shell mold 24, and laying the upper pre-forming layer, the lower pre-forming layer and the outer ring preform layer on the inner side of the upper shell mold, the lower shell mold and the outer ring shell mold, respectively;
2) placing the outer ring shell mold 24 and the inner ring pre-forming layer respectively to the both ends of the inner side of the lower shell mold 23 for assembly, and placing the nylon air pipe 4 between the outer ring shell mold 24, the inner ring pre-forming layer and the lower shell mold 23;
3) the inner ring pre-forming layer is pre-laid and formed by an external pre-forming fixture, and then the laid inner ring pre-forming layer is placed on the lower shell mold 23 to be combined, the upper shell mold 22, the lower shell mold 23 and the outer ring shell mold 24 are assembled and combined to form the pre-forming shell mold 2, and the upper pre-forming layer, the lower pre-forming layer, the outer ring pre-forming layer, and the inner ring pre-forming layer are tightly connected to form a rim pre-forming piece; and
   in the laying process of the upper pre-forming layer and the lower pre-forming layer, the inner ring pre-forming layer is gradually thinned near the inner ring pre-forming layer, thereby facilitating the flat and tight connection between the inner ring pre-forming layer and the upper pre-forming layer and the lower pre-forming layer; and the outer ring pre-forming layer extends to both sides during the paving process, so that the outer ring pre-forming layer is smoothly and tightly connected to the upper pre-forming layer and the lower pre-forming layer, thereby ensuring the strength of the formed rim at the joint. Meanwhile, in the laying process of the pre-forming layer, local reinforcement is performed by thickening the laying at specific locations, such as the brake part and the spoke hole part.
   The pre-forming shell mold 2 is further provided with a mounting hole (not shown in the figure) penetrating through the inner and outer sides of the pre-forming mold shell and used for mounting a tire inflation nozzle fitting, and the end portion of the nylon air pipe 3 is led out from the mounting hole and is connected to an inflation nozzle fitting.
4) Filling the nylon air pipe 4 with air via the inflation nozzle fitting, and keeping the pressure for a few seconds to make the nylon air pipe expand to support the pre-forming layer to be tightly attached to the inner wall of the pre-forming cavity of the pre-forming shell mold;
5) placing the pre-forming shell mold 2 into the curing cavity 11 of the curing mold 1, heating the curing mold 1, meanwhile, pressurizing the nylon air pipe 4, performing the heating process and the pressurizing process simultaneously until the temperature reaches between 145°C and 155°C, the pressure reaches between 1.5MPa and 1.8MPa, until the rim pre-forming piece is completely formed and cured to form the rim; and
6) opening the curing mold 1, stripping off the pre-forming shell mold 2 from the surface of the rim, taking out the rim, and performing machining and surface treatment to obtain the finished rim.

The above are only preferred embodiments of the present disclosure, but the scope of protection of the present disclosure is not limited thereto, and any changes or substitutions that can be easily conceived of by those skilled in the art within the technical scope disclosed by the present disclosure shall fall within the protection scope of the present disclosure. Therefore, the protection scope of the present disclosure should be subject to the protection scope of the claims.

## Claims

1. A forming mold for a carbon fiber composite material, comprising a curing mold and a pre-forming shell mold detachably spliced, the curing mold is provided with a curing cavity used for containing the pre-forming shell mold, the pre-forming shell mold is provided with a pre-forming cavity adapted to a structure of a formed product, an inner wall of the pre-forming cavity is used for laying a pre-forming layer to form a pre-forming piece of a product, a nylon air pipe is arranged in the pre-forming cavity, and the nylon air pipe supports the pre-forming layer to be tightly attached to the inner wall of the pre-forming cavity in an inflated state.

2. The forming mold for the carbon fiber composite material according to claim 1, wherein the pre-forming shell mold comprises a plurality of groups of split shell molds spliced together.

3. The forming mold for the carbon fiber composite material according to claim 2, wherein two adjacent groups of the split shell molds are detachably spliced by means of an engaging structure.

4. The forming mold for the carbon fiber composite material according to claim 1, wherein the curing mold includes an upper curing mold and a lower curing mold, the upper curing mold is arranged right above the lower curing mold in a lifting mode, a bottom side of the upper curing mold is provided with an upper curing groove, a top side of the lower curing mold is provided with a lower curing groove, and the upper curing groove and the lower curing groove are matched to form the curing cavity used for containing the pre-forming shell mold.

5. The forming mold for the carbon fiber composite material according to claim 1, wherein the pre-forming layer includes a plurality of layers and is made of the carbon fiber composite material.

6. The forming mold for the carbon fiber composite material according to claim 1, wherein the curing mold is made of a metal material.

7. The forming mold for the carbon fiber composite material according to claim 1, wherein the pre-forming shell mold is made of a plastic material.

8. A preparation method for a carbon fiber composite material according to any one of claims 1 to 7, comprising the following steps:
S1, pre-manufacturing a plurality of groups of split shell molds, and laying a carbon fiber composite material on the inner sides of the split shell molds to form pre-forming layers;
S2, assembling and combining the plurality of groups of split shell molds to form a pre-forming shell mold, tightly connecting and matching the pre-forming layers on the inner sides of each group of the split shell molds to form a pre-forming piece of a product, and pre-placing the nylon air pipe into an inner portion of the pre-forming piece;
S3, inflating air into the nylon air pipe, and keeping the pressure for a few seconds, so that the nylon air pipe expands to support the pre-forming layers to be tightly attached to the inner wall of a pre-forming cavity of the pre-forming shell mold;
S4, placing the pre-forming shell mold into a curing cavity of a curing mold, heating the curing mold, and pressurizing the nylon air pipe, wherein the heating process and the pressurization process are performed at the same time until the temperature and the pressure reach the requirement of curing forming, and then the pressure is continuously kept until the pre-forming piece is completely formed and cured to form an initial product;
S5, opening the curing mold, stripping off the pre-forming shell mold from the surface of the initial product, taking out the initial product, and performing machining on the initial product to obtain a finished product.
